# EUROPÄISCHE PATENTANMELDUNG

(11) **EP 1 912 166 A1**
(43) Veröffentlichungstag der Anmeldung: **16.04.2008**
(21) Anmeldenummer: 07117792.7
(22) Anmeldetag: 02.10.2007
(51) Int. Cl.: G06Q 10/00

(54) **Planungswerkzeug und Arbeitsverfahren zur automatisierten Planung und Überprüfung von Prozessen mit unbestimmt variablen Ressourcen**

(30) Priorität: 09.10.2006 DE 102006047680
(71) Anmelder: Raschick, Hermann, 92334 Berching (DE)
(72) Erfinder: Raschick, Hermann, 92334 Berching (DE)
(74) Vertreter: Lang, Christian

(57) **Zusammenfassung**

Planungswerkzeug und Arbeitsverfahren zur automatisierten Planung und Überprüfung von Prozessen mit unbestimmt variablen Ressourcen, bei welchem mittels Erfassungsmitteln Daten bzgl. der unbestimmt variablen Ressourcen (Ressourcendaten) und des die Ressourcen verbrauchenden Prozesses (Prozessdaten) in einer Datenverarbeitungsanlage erfasst werden, wobei die Ressourcendaten absolute Ressourcenwerte und Werte zur Wahrscheinlichkeit der absoluten Werte (Wahrscheinlichkeitswerte) umfassen, welche zu einem oder mehreren relativen Ressourcenwerten mittels Datenverarbeitungsmitteln verarbeitet werden, und wobei der oder die relativen Ressourcenwerte mittels Datenverarbeitungsmitteln den Prozessdaten zugeordnet werden, so dass mindestens ein Planungs- und/oder Kontrollwert bestimmt wird.

## Beschreibung

HINTERGRUND DER ERFINDUNG

GEBIET DER ERFINDUNG

Die vorliegende Erfindung betrifft ein Arbeitsverfahren zur automatisierten Planung und Überprüfung von Prozessen mit unbestimmt variablen Ressourcen sowie ein entsprechendes Planungswerkzeug.

STAND DER TECHNIK

Bei Produktionsprozessen von technischen Gütern wird zur effektiven und kostengünstigen Herstellung ein Prozessablauf geplant, bei welchem die verschiedenen Arbeitsschritte in ihrer Reihenfolge und ihrem Umfang genau festgelegt sind. Entsprechend ist es nach modernen Produktionsprozessen in einfacher Weise leicht möglich benötigtes Material just-in-time dem Produktionsprozess zuzuführen, da nach Beginn des Produktionsprozesses der erforderliche Bedarf und der Zeitpunkt des Bedarfs aufgrund des bekannten Prozessablaufs genau bekannt sind. Auf diese Weise lassen sich sehr effektive und kostengünstige Prozesse installieren, die insbesondere durch verminderte Lagerhaltung und dem dadurch verringerten Platzbedarf bzw. Kapitaleinsatz wirtschaftlich besonders interessant sind.

Allerdings haben derartige Produktionsprozesse den Nachteil, dass der Produktionsprozess und die entsprechende Anforderung und Bestellung von benötigten Materialien erst nach Auftragseingang angestoßen werden können. Durch entsprechende Planungs- und Bestellzeiten für die benötigten Materialien kommt es daher zu einer Verzögerung im Produktionsprozess, so dass die Lieferzeiten unter Umständen einen erheblichen Umfang annehmen können.

OFFENBARUNG DER ERFINDUNG

AUFGABE DER ERFINDUNG

Es ist deshalb Aufgabe der vorliegenden Erfindung ein Arbeitsverfahren sowie ein entsprechendes Planungswerkzeug zur Verfügung zu stellen, mit welchem die Nachteile des Standes der Technik vermieden werden können und Produktionsprozesse effektiver gestaltet und insbesondere abgekürzt werden können.

TECHNISCHE LÖSUNG

Diese Aufgabe wird gelöst mit einem Arbeitsverfahren mit den Merkmalen des Anspruchs 1 sowie einem Planungswerkzeug mit den Merkmalen des Anspruchs 16. Vorteilhafte Ausgestaltungen der Erfindung sind Gegenstand der abhängigen Ansprüche.

Die Erfindung geht aus von der Erkenntnis, dass sich eine Verkürzung eines technischen Produktionsprozesses im Wesentlichen dadurch erreichen lässt, wenn der zu erwartende Auftragseingang zuverlässig abgeschätzt werden kann, da dann ohne zusätzliche Lagerkapazitäten zu schaffen eine zielgenaue Beschaffung der für die Produktion benötigten Materialien vorgenommen werden kann.

In der Vergangenheit war jedoch eine zuverlässige und zielgerichtete Abschätzung bzw. Planung des Produktionsprozesses nicht möglich, da die Vertriebs- bzw. Absatzplanung keine verlässlichen Werte liefern konnte, sondern lediglich auf ungeprüften Annahmen beruhte.

Beim Vertriebsprozess beruht nämlich bis dato vieles auf groben Einschätzungen, da keine strukturierte Planung vorhanden ist. Dies beruht wiederum darauf, dass der Vertriebsprozess auf unbestimmt variablen Ressourcen beruht, wie beispielsweise dem Zeitbedarf eines Vertriebsmitarbeiters von der ersten Kontaktaufnahme bis zum endgültigen Abschluss des Liefervertrages. Dieser Zeitbedarf kann in unbestimmter Weise stark schwanken, so dass bisher lediglich grobe Abschätzungen von Vertriebszielen oder Fortschreibungen bzw. Extrapolationen von früheren Daten vorgenommen worden sind. Diese sind jedoch äußerst ungenau und nicht für die Steuerung eines Produktionsprozesses mit Materialbeschaffung und dergleichen geeignet.

Hier setzt die Erfindung an, indem Daten bzgl. der unbestimmt variablen Ressourcen, d. h. Ressourcendaten, und Daten bzgl. des die Ressourcen verbrauchenden Prozesses, d. h. Prozessdaten, eines entsprechenden Prozesses mit unbestimmt variablen Ressourcen, wie z. B. eines Vertriebsprozesses, in einer Datenverarbeitungsanlage erfasst werden, wobei die Ressourcendaten absolute Ressourcenwerte z. B. hinsichtlich des Zeitbedarfs für einen Vertriebsschritt, und Werte zur Wahrscheinlichkeit im Bezug zum absoluten Ressourcenwert, beispielsweise die Wahrscheinlichkeit eines Abschlusses bezogen auf den Vertriebsschritt, umfassen, so dass automatisiert relative Ressourcenwerte berechnet werden können, welche gegenüber den unbestimmt variablen Ressourcendaten gewichtete Ressourcenwerte darstellen, die den tatsächlichen Gegebenheiten und der Wirklichkeit deutlich näher kommen. Mit den relativen bzw. gewichteten Ressourcenwerten können die Prozessdaten, z. B. verfügbare Vertriebszeit, wiederum automatisiert in Bezug gesetzt werden, so dass sich daraus Planungs- und/oder Kontrollwerte bestimmen lassen. Damit ist es möglich eine deutlich verlässlichere Planung des Vertriebs und Absatzes und somit der Produktion zu ermöglichen. Obwohl die Prozesse mit unbestimmt variablen Ressourcen in vielen Bereichen vorkommen können, ist die vorliegende Erfindung insbesondere auf Vertriebsprozesse bezogen, welche dem eigentlichen Produktionsprozess vorgeschaltet sind und damit diesen stark bestimmen und beeinflussen.

Durch die Automatisierung des Verfahrens ist eine leichte Durchführung auch für weniger geschultes Personal möglich.

Die Vertriebsprozesse können gemäß der Erfindung in eine Vielzahl von kleinen Vertriebsschritten unterteilt und strukturiert werden, wie beispielsweise einem ersten Vertriebsschritt der Kontaktaufnahme, einem zweiten Schritt der Produkt- oder Dienstleistungsvorstellung, einem dritten Schritt des telefonischen Nacharbeitens, einem vierten Schritt der Vertragsverhandlung usw. bis zum endgültigen Abschluss.

Diesen einzelnen Vertriebsschritten können Werte bzgl. des Zeitbedarfs als absolute Ressourcenwerte zugeordnet werden, beispielsweise für den ersten Vertriebsschritt der Kontaktaufnahme eine halbe Stunde, für den zweiten Schritt der Produkt- und Dienstleistungsvorstellung zwei Stunden usw. Diesen einzelnen Vertriebsschritten lassen sich Wahrscheinlichkeitswerte bzgl. der Wahrscheinlichkeit eines tatsächlich später realisierten Verkaufs zuordnen. Beispielsweise können aus 100 Kontaktaufnahmen und daraus resultierenden 20 Produkt- und/oder Dienstleistungsvorstellungen sich fünf Abschlüsse realisieren, so dass es in diesem Fall beispielsweise klar ist, dass für fünf Abschlüsse 50 Stunden Kontaktaufnahme und 80 Stunden Produkt- und/oder Dienstleistungsvorstellung erforderlich sind. Daraus lässt sich ein relativer Ressourcenwert von 26 Stunden Zeitbedarf pro Verkauf ermitteln.

Als Prozessdaten können beispielsweise die gesamten für den Vertrieb zur Verfügung stehende Arbeitszeiten aller oder einzelner Vertriebsmitarbeiter herangezogen werden, so dass durch Teilung der gesamten zur Verfügung stehenden Zeit (Prozessdaten) durch den relativen Ressourcenwert Zeit pro Verkauf sich ein Planungs- und/oder Kontrollwert in Form eines Absatzziels oder einer Absatzkontrolle errechnen lässt. Beispielsweise würde sich bei obigem Beispiel bei einer gesamten zur Verfügung stehenden Vertriebszeit von 16.000 Stunden ein Absatzziel von 615 Maschinen bzw. ein Absatzkontrollwert von ebenfalls 615 Maschinen ergeben.

Die zur Verfügung stehende Zeit kann dabei auf bestimmte Parameter bezogen sein, wie beispielsweise auf ein oder mehrere Absatzgebiete, auf ein oder mehrere Mitarbeiter, bestimmte Produkte, Dienstleistungen und/oder Zeiträume sowie Kombinationen davon.

Insbesondere lassen sich die Prozesse in einer Datenverarbeitungsanlage variabel strukturieren und mit verschiedenen Daten, die wiederum auf bestimmte Parameter bezogen sein können, beschreiben.

Entsprechend können beispielsweise auch die Anzahl der Kunden insbesondere bezogen auf den Parameter des örtlichen Gebiets und der Bedarf der einzelnen Kunden als absolute Ressourcenwerte Verwendung finden, wobei dann der Marktanteil als Wahrscheinlichkeitswert erfasst werden kann. Das Produkt aus der Anzahl der Kunden, insbesondere der Anzahl der Kunden in einem Gebiet, und dem Bedarf des einzelnen Kunden sowie dem Marktanteil ergibt dann den relativen Ressourcenwert in Form des Absatzpotentials, insbesondere für das betreffende Gebiet. Dieser relative Ressourcenwert kann dann wieder in das Verhältnis zur zur Verfügung stehenden Vertriebskapazität gesetzt werden, so dass sich ein entsprechender Planungs- und/oder Kontrollwert in Form eines Vertriebsziels oder einer Vertriebskontrolle ergibt. Stehen beispielsweise 100 potentielle Kunden in einem bestimmten Gebiet zur Verfügung, welche das Produkt und/oder die Dienstleistung einmal pro Jahr benötigen, dann ergibt sich zusammen aus dem Marktanteil von beispielsweise 20 %, ein absolutes Potential von 20 Einheiten.

Sofern für den Vertrieb der 20 Einheiten beispielsweise 1000 Arbeitsstunden zur Verfügung stehen, ergibt sich als Planungs- und/oder Kontrollwert das Vertriebsziel mit einem Wert von 50 Arbeitsstunden, die pro Verkauf eingesetzt werden können.

Die Planungs- und/oder Kontrollwerte verschiedener Prozesse können in dem Verfahren automatisiert miteinander verglichen und/oder kombiniert werden und zwar insbesondere in der Weise, dass sie als Korrekturmittel eingesetzt werden. Beispielsweise kann in einem Prozess eine sog. Bottom-Up-Planung vorgenommen werden, die ausgehend von den Angaben des Vertriebsmitarbeiters bzgl. des Zeitbedarfs für einzelne Vertriebsschritte und der Wahrscheinlichkeit eines daraus resultierenden Verkaufsabschlusses eine Planung der Absatzzahlen erlaubt. Andererseits kann in einer sog. Top-Down-Analyse durch Angabe der potentiellen Kunden, ihres Produkt- oder Dienstleistungsbedarfs und des erwarteten Marktanteils ein Vertriebsziel in Form des zugestandenen Zeitaufwandes pro Abschluss geplant werden. Die Planungswerte der Top-Down-Planung und der Bottom-Up-Planung können dann in der Weise miteinander kombiniert werden, dass sie als Korrekturmittel oder Grenzwerte eingesetzt werden, wobei dann z. B. in einem einfachen Fall der Zeitaufwand des Vertriebsmitarbeiters für einen bestimmten Vertriebsschritt auf einen maximalen Zeitwert begrenzt wird.

Darüber hinaus ist es auch möglich, dass die Planungs- und/oder Kontrollwerte zur Variation bzw. Beeinflussung absoluter Ressourcenwerte anderer Prozesse eingesetzt werden. Beispielsweise kann das Vertriebsziel in Form des maximalen Zeitaufwands pro Abschluss bei der Ermittlung des Absatzzieles in der Weise eingesetzt werden, dass bei einem Überschreiten des Vertriebsziels, also des zur Erzielung eines Abschlusses zur Verfügung stehenden Zeitaufwandes, über den relativen Ressourcenwert der Zeit pro Verkauf eine Beschränkung der Anzahl der Vertriebsschritte für diesen Vertriebsprozess vorgenommen wird, da das Vertriebsziel anzeigt, dass das Absatzpotential nicht ausreicht, um beispielsweise die Kapazität eines Vertriebsmitarbeiters gemäß der Planung des Absatzzieles auszulasten. Entsprechend kann der Vertriebsmitarbeiter für andere Vertriebsprozesse, beispielsweise eines anderen Produktes eingesetzt werden.

Gemäß dem vorliegenden Verfahren können mehrere Vertriebsprozesse für unterschiedliche Produkte und/oder Dienstleistungen für bzw. von einem oder mehreren Mitarbeitern für ein oder mehrere Gebiete automatisiert abgebildet und/oder miteinander kombiniert werden. Dies bedeutet, dass für eine Vielzahl von Produkten und/oder Dienstleistungen oder Kombinationen (Pakete) daraus, für eine Vielzahl von Mitarbeitern bzw. für verschiedene Betriebsprozesse eines oder mehrerer Mitarbeiter und für eine Vielzahl von Gebieten eine aufeinander abgestimmte vollständige Vertriebsplanung und sich daraus ergebende Produktionsplanung möglich ist.

Weiterhin ist es möglich, den Planungs- und/oder Kontrollwerten Erträge und Kosten zuzuordnen, so dass gleichzeitig auch eine automatisierte Rentabilitätsberechnung möglich ist.

Die Rentabilitätswerte können dann zusätzlich zur Rückkopplung der Planung eingesetzt werden.

Ferner besteht die Möglichkeit, die Planungs- und/oder Kontrollwerte, wie Absatzziele und/oder Absatzkontrollwerte als Eingangsgröße für die erfolgsabhängige Vergütung der Vertriebsmitarbeiter heranzuziehen.

Insgesamt ermöglichen die absoluten und/oder relativen Ressourcenwerte und/oder Prozessdaten und die daraus ermittelten Planungs- und/oder Kontrollwerte eine vollständige Projektsteuerung, bei welcher beispielsweise auch der voraussichtliche Projektabschlusstermin, also beispielsweise der Verkauf, die verbleibenden Tage bis zum Abschluss, die Termine der nächsten Aktivitäten usw. ermittelt und angezeigt werden können.

Die Projektsteuerung kann den gesamten Projektablauf von der Kontaktaufnahme bis zur Auslieferung des Produkts umfassen.

Darüber hinaus ist es möglich bei dem Verfahren tatsächliche Prozessdaten zur Überprüfung der Planungs- und/oder Kontrollqualität einzusetzen, wobei aufgrund der tatsächlichen Prozessdaten auch Rückkopplungen für die Planung beispielsweise hinsichtlich der absoluten Ressourcenwerte, der Wahrscheinlichkeitswerte und/oder der Prozessdaten zur Verbesserung der Planung und Kontrolle eingesetzt werden können.

Die Ressourcendaten werden vorzugsweise aus geschätzten Daten und/oder tatsächlich in der Vergangenheit ermittelten Daten sowie daraus extrapolierten und gemittelten Daten gewonnen. Beispielsweise können die tatsächlichen Zeitaufwendungen für einzelne Vertriebsschritte tatsächlich gemessen werden, so dass daraus Mittelwerte berechnet werden können.

Das Verfahren sieht insbesondere vor, die Daten und/oder Werte graphisch auszugeben, um einen leichten Einblick in die Planung und Kontrolle zu ermöglichen.

Das Verfahren kann durch ein ebenfalls beanspruchtes Planungswerkzeug, welches die automatisierte Planung und Überwachung von Prozessen mit unbestimmt variablen Ressourcen, insbesondere zeitlich unbestimmt variablen Ressourcen sowie vorzugsweise Vertriebsprozesse durchführt, realisiert werden. Das Planungswerkzeug umfasst Datenerfassungsmittel zum Erfassen der Ressourcendaten, nämlich der absoluten Ressourcenwerte und der Wahrscheinlichkeitswerte sowie der Prozessdaten, Datenspeichermittel zum Speichern der Daten und Werte, Datenverarbeitungsmittel zum Verarbeiten der entsprechenden Daten und Werte gemäß dem vorher beschriebenen Verfahren und Datenausgabemittel zur Ausgabe der Planungs- und/oder Kontrollwerte und/oder zur Anzeige der Daten und/oder Werte.

Insbesondere ist das Planungswerkzeug als maschinenlesbare Signalfolge auf einem Speichermedium in Form eines Computerprogramms vorgesehen, wobei es bei entsprechender Ausführung in einer Datenverarbeitungsanlage das vorher beschriebene Verfahren durchführt. Die Speichermittel können dabei als wechselbare Speichermittel für eine Datenverarbeitungsanlage, als feste Speichermittel (Festplattenspeicher) oder als Speichermittel in einem Netzwerk von Datenverarbeitungsanlagen (Internet) vorliegen. Entsprechend können auch Prozessoren ein oder mehrerer Datenverarbeitungsanlagen zur Bearbeitung der Signalfolge eingesetzt werden.

KURZBESCHREIBUNG DER FIGUREN

Weitere Vorteile, Kennzeichen und Merkmale der Erfindung werden bei der nachfolgenden detaillierten Beschreibung eines Ausführungsbeispiels anhand der beigefügten Zeichnungen deutlich. Die Zeichnungen zeigen hierbei in rein schematischer Weise in
- Figur 1: die Struktur eines erfindungsgemäßen Planungswerkzeugs;
- Figur 2: die Unterstruktur einer Komponente der Struktur aus Figur 1;
- Figur 3: die Unterstruktur einer weiteren Komponente der Struktur aus Figur 1;
- Figur 4: die Unterstruktur einer Komponente der Unterstruktur der Figur 3;
- Figur 5: die Unterstruktur einer Komponente der Struktur der Figur 1;
- Figur 6: die Unterstruktur einer Komponente der Struktur aus Figur 1;
- Figur 7: die Unterstruktur einer Komponente der Struktur aus Figur 1;
- Figur 8: die Unterstruktur einer Komponente der Struktur der Figur 1;
- Figur 9: eine Darstellung der Ausführungsmöglichkeiten der Unterstruktur der Figur 8;
- Figur 10: die Unterstruktur einer Komponente der Struktur aus Figur 1;

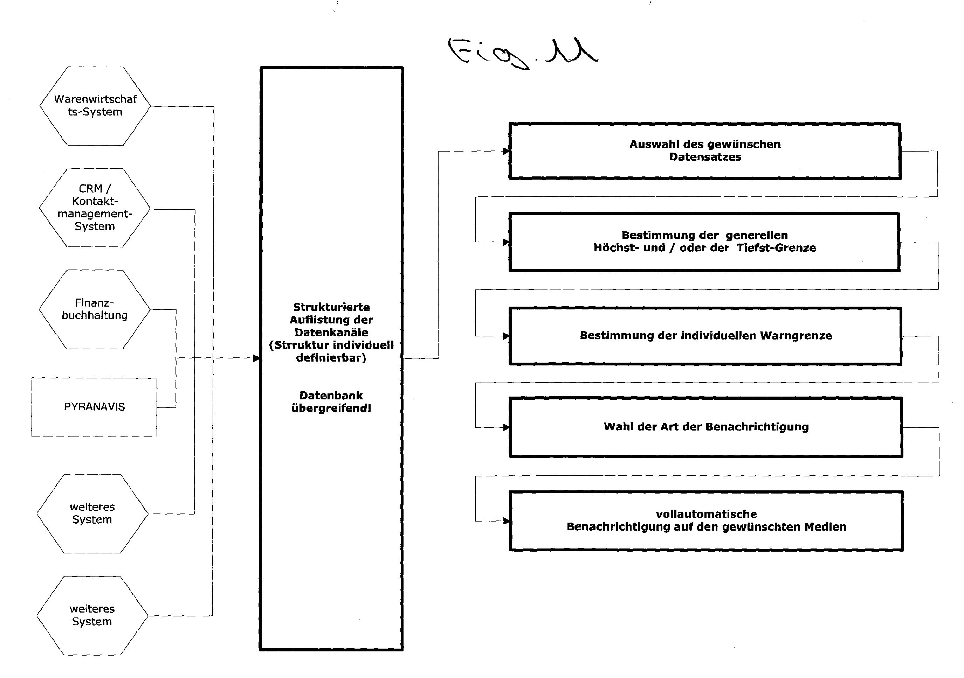

- Figur 11: die Unterstruktur einer Komponente der Struktur aus Figur 1;
- Figur 12: die Unterstruktur einer Komponente der Struktur aus Figur 1;
- Figur 13: das Ablaufschema des Planungswerkzeugs; und in
- Figur 14: die Darstellung der Verarbeitung von Ressourcendaten und Prozessdaten zur Ermittlung von Planungs- und/oder Kontrollwerten.

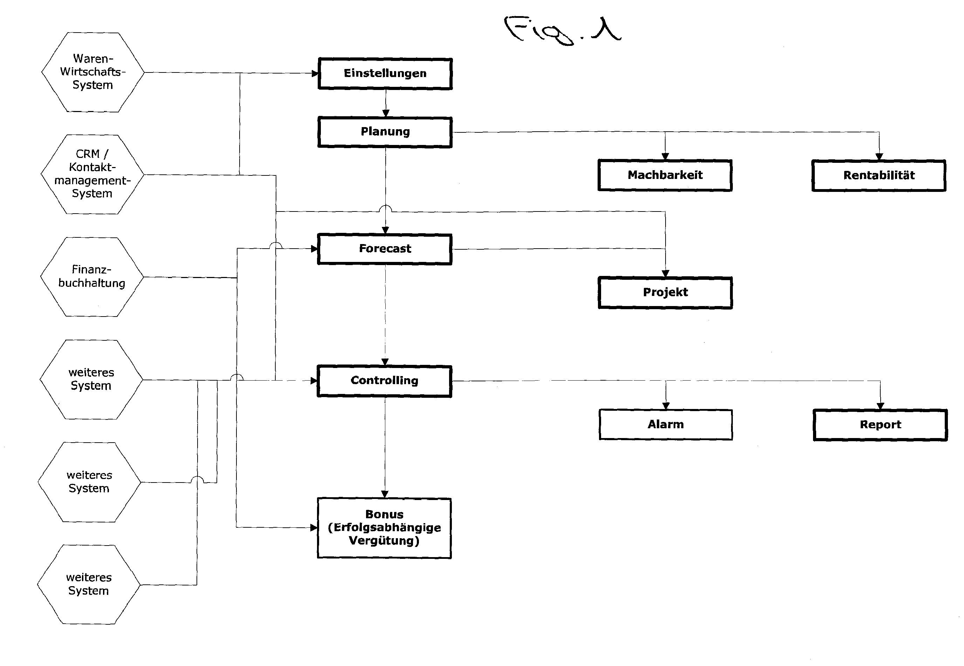

Die Figur 1 zeigt in einer schematischen Darstellung den Aufbau eines Planungswerkzeugs gemäß der vorliegenden Erfindung, mit welchem das erfindungsgemäße Verfahren durchgeführt werden kann.

In der linken Bildhälfte sind mit den Sechsecken externe Systeme dargestellt, welche Schnittstellen mit dem erfindungsgemäßen Planungswerkzeug aufweisen. Das erfindungsgemäße Planungswerkzeug ist durch die Rechtecke der rechten Bildhälfte dargestellt. Die externen Systeme, welche Daten an das Planungswerkzeug liefern können, können beispielsweise durch Warenwirtschaftssysteme, Kontaktmanagementsysteme, Buchhaltungssysteme oder weitere Systeme gebildet sein.

Die Struktur des Planungswerkzeugs unterteilt sich in die großen Bereiche bzw. Module Einstellungen, Planung, Forecast, Controlling und Bonus.

Im Bereich der Planung gibt es Untermodule bzgl. der Machbarkeit und Rentabilität während an den Bereich Forecast das Untermodul Projekt und an den Bereich Controlling die Untermodule Alarm und Report angegliedert sind.

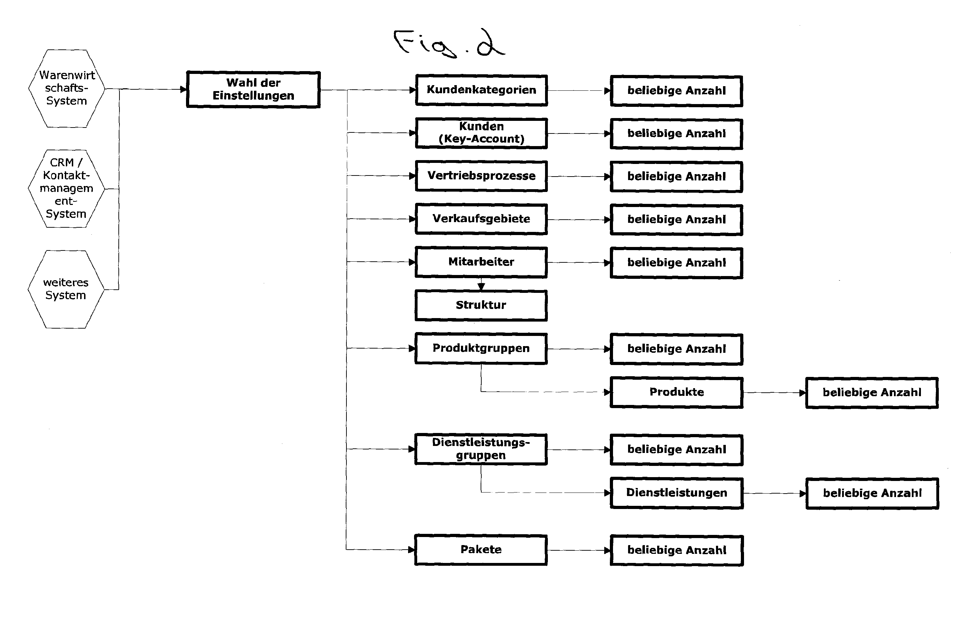

Das Planungswerkzeug weist eine äußerst variable Struktur auf, so dass unterschiedlichste Prozesse automatisiert geplant und überprüft werden können. Hierzu dient, wie Figur 2 zeigt, das Modul Einstellungen, welches ermöglicht, unterschiedlichste Datenstrukturen und Prozesse zu definieren.

Wie der Figur 2 weiterhin zu entnehmen ist, können insbesondere eine beliebige Anzahl von Kundenkategorien, eine beliebige Anzahl von Kunden, sowie eine beliebige Anzahl von Vertriebsprozessen, Verkaufsgebieten und Mitarbeitern, Produktgruppen, Dienstleistungsgruppen und Kombinationen daraus angelegt werden. Die Produktgruppen können weiterhin in einzelne Produkte untergliedert werden genauso wie die Dienstleistungsgruppen in Dienstleistungen. Die Mitarbeiter können gemäß einer Organisationsstruktur angelegt und abgebildet werden.

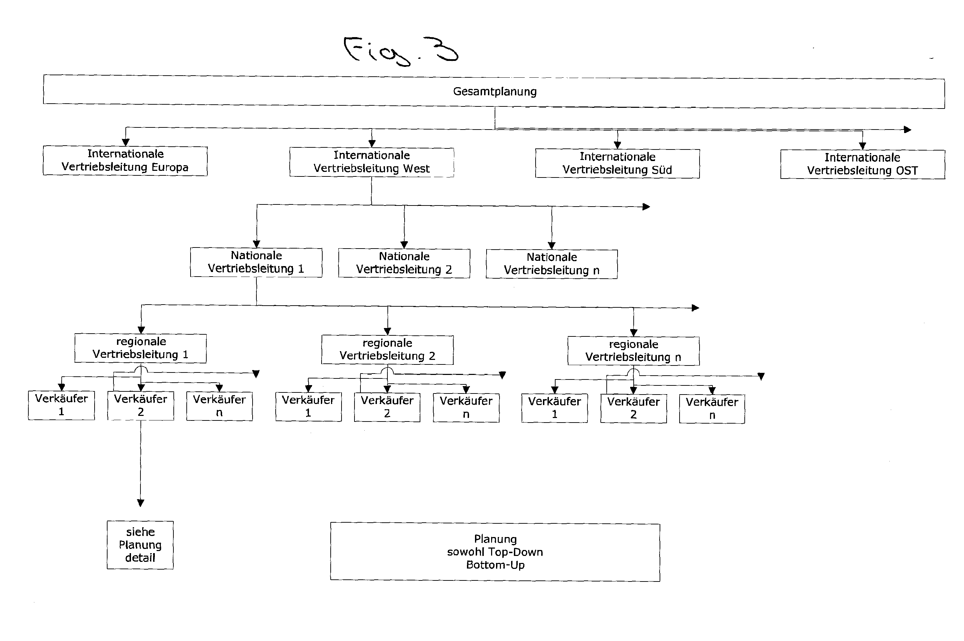

Die Figur 3 zeigt die Unterstruktur des Bereichs Planung, die beispielhaft gewählt ist. Auch hier können variable Strukturen definiert werden. Bei der Figur 3 ist die gesamte Planung beispielsweise unterteilt in internationale Vertriebsleitungen Ost, Süd, West und Europa, wobei jede von ihnen eine entsprechende Unterstruktur aufweist, wie sie für die internationale Vertriebsleitung West dargestellt ist.

Dort gibt es entsprechende nationale Vertriebsleitungen, die wiederum in regionale Vertriebsleitungen mit den zugeordneten Verkäufern untergliedert sind. Die Planungsstruktur ermöglicht sowohl eine sog. Top-Down- als auch eine Bottom-Up-Planung, also einerseits ausgehend von einer Gesamtplanung, welche dann aufgeschlüsselt wird bis in die Planung der einzelnen Verkäufer (Top-Down), als auch umgekehrt ausgehend von der Planung der einzelnen Verkäufer zum Ergebnis der Gesamtplanung (Bottom-Up).

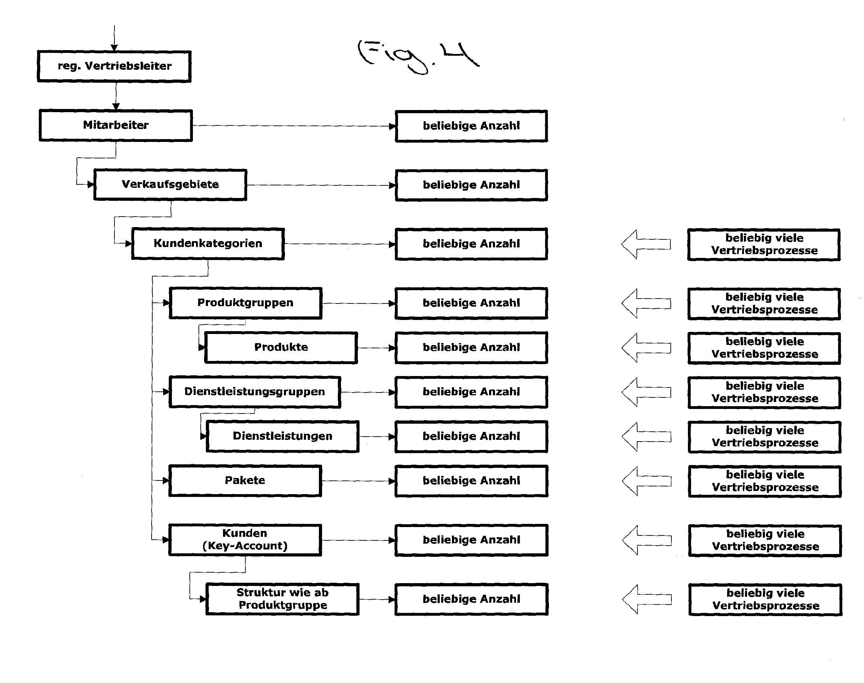

Die Figur 4 zeigt die Strukturierung im Bereich der regionalen Vertriebsleitung, wobei den einzelnen Mitarbeitern auf der regionalen Ebene, welche wiederum eine beliebige Anzahl sein können, eine beliebige Anzahl von Verkaufsgebieten mit einer beliebigen Anzahl von Kundenkategorien, Produktgruppen, Dienstleistungsgruppen und Paketen daraus zugeordnet werden können. Diese Struktur ermöglicht eine beliebige Anzahl von Vertriebsprozessen für eine beliebige Anzahl von Produkten, Dienstleistungen, Kombinationen daraus, Verkaufsgebieten, Kunden usw. für die jeweiligen Mitarbeiter durchzuführen.

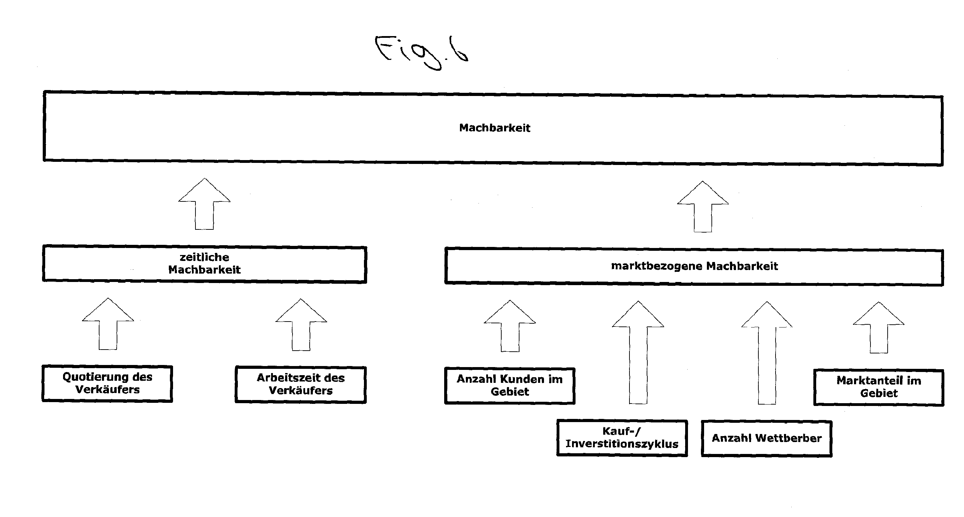

Im Planungsmodul ist das Arbeitsverfahren zur automatisierten Planung und Überprüfung verwirklicht, wie es in Figur 6 dargestellt ist.

In der Unterstruktureinheit Machbarkeit sind gemäß dem gezeigten Ausführungsbeispiel zwei unterschiedliche Prozesse mit unbestimmt variablen Ressourcen dargestellt, welche für das gezeigte Ausführungsbeispiel mit zeitlicher Machbarkeit und marktbezogener Machbarkeit bezeichnet sind.

Bei der zeitlichen Machbarkeit, welche dem Absatzziel entspricht, werden die für den jeweiligen Vertriebsprozess notwendigen Vertriebsschritte, die auf bestimmte Kunden, Gebiete, Zeiträume usw. gemäß der Struktur der Figur 4 bezogen sein können, mit absoluten Ressourcenwerten in Form des erforderlichen Zeitbedarfs aus Sicht des jeweiligen Verkäufers hinterlegt, wobei zusätzliche Wahrscheinlichkeitswerte für den daraus resultierenden Abschluss eines Verkaufs angegeben werden. Aus diesen wird der relative Ressourcenwert Zeitbedarf pro Verkauf, welcher in der Figur 6 als Codierung des Verkäufers, bezeichnet ist, ermittelt. Dieser wird mit der Gesamtarbeitszeit des Verkäufers ins Verhältnis gesetzt, so dass ein zeitlich machbares Absatzziel (zeitliche Machbarkeit) ermittelt wird. Dieses kann bereits für die entsprechenden Planungen z. B. bei der Planung Bottom-Up, eingesetzt werden.

Zusätzlich gibt es in dem Modul Machbarkeit die Verwirklichung des erfindungsgemäßen Arbeitsverfahrens bezogen auf die unbestimmt variablen Ressourcen im Hinblick auf das Absatzpotential, wobei die Anzahl der Kunden in dem entsprechenden Gebiet und der Kauf- bzw. Investitionszyklus als die absoluten Ressourcenwerte erfasst werden.

Die Anzahl der Wettbewerber und der sich daraus ergebende Marktanteil im Gebiet stellen den Wahrscheinlichkeitswert dar, aus welchem der relative Ressourcenwert Absatzpotential errechnet wird, der als marktbezogene Machbarkeit in Figur 6 dargestellt ist.

Im Bezug auf eine Top-Down-Planung kann dieser relative Ressourcenwert des Absatzpotentials (marktbezogene Machbarkeit) eingesetzt werden, um im Verhältnis zur zur Verfügung stehenden Vertriebskapazität, als der gesamten zur Verfügung stehenden Vertriebsarbeitszeit, ein Vertriebsziel zu definieren (nicht dargestellt). In Figur 6 ist dagegen dargestellt, dass der relative Ressourcenwert Absatzpotential (marktbezogene Machbarkeit) als Kontrollwert bzw. als Korrekturmittel für die zeitliche Machbarkeit eingesetzt wird, da eine rein zeitliche Planung ohne Berücksichtigung des Absatzpotentials möglicherweise zu einer Fehlplanung führen würde, wenn nicht ausreichend Absatzpotential vorhanden ist. Insgesamt ergibt sich somit ein Planungswert, der in der Figur 6 als Machbarkeit dargestellt ist.

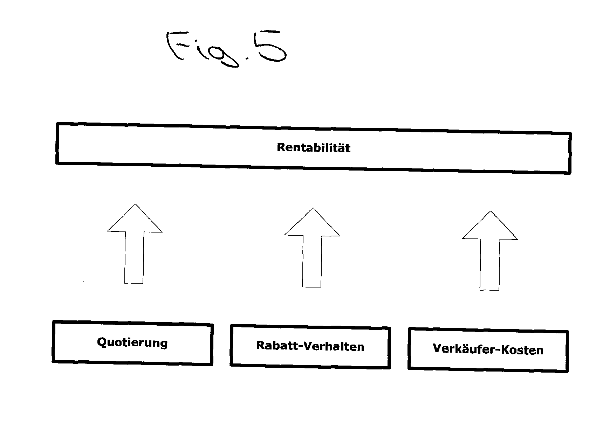

Dieses Ergebnis kann zusammen mit Ertrags- und Kostenwerten im Modul Rentabilität auch zur Rentabilitätsplanung oder zur Überprüfung der Rentabilität eingesetzt werden. Allerdings kann hier auch der relative Ressourcenwert Zeitbedarf pro Verkauf mit den entsprechenden Ertragswerten und Kosten, wie Rabattkosten, Verkäuferkosten und dergleichen zur direkten Rentabilitätsabschätzung und Überprüfung verwendet werden (siehe Figur 5).

Im Wesentlichen gibt jedoch das Planungsmodul einen Planungswert und/oder Kontrollwert aus, mit welchem im Forecast-Modul, Projektmodul bzw. Controlling-Modul entsprechende Aussagen getroffen werden können, welche insbesondere die Produktionsplanung und damit die Verbesserung des Produktionsprozesses ermöglichen.

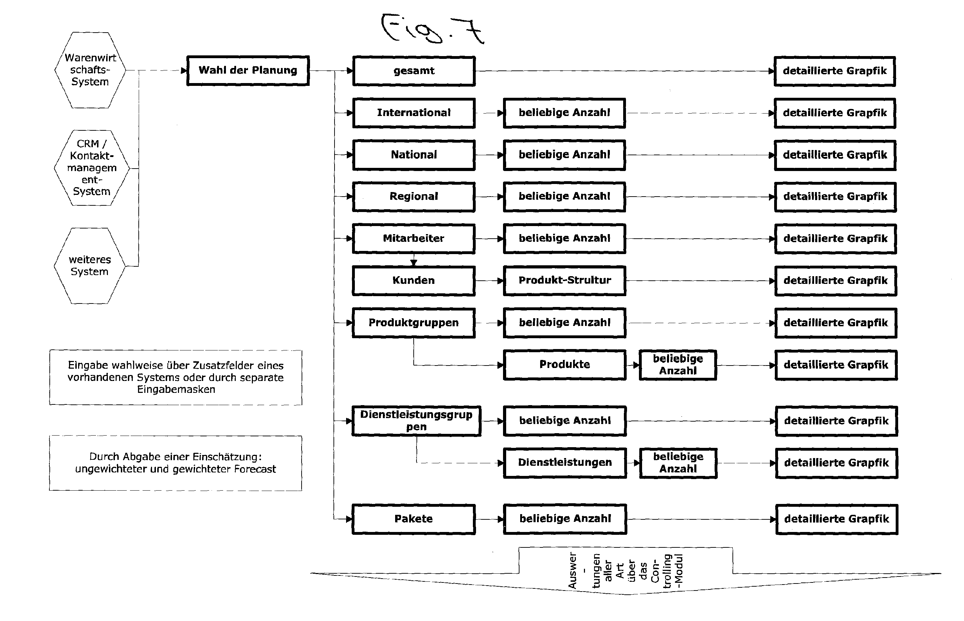

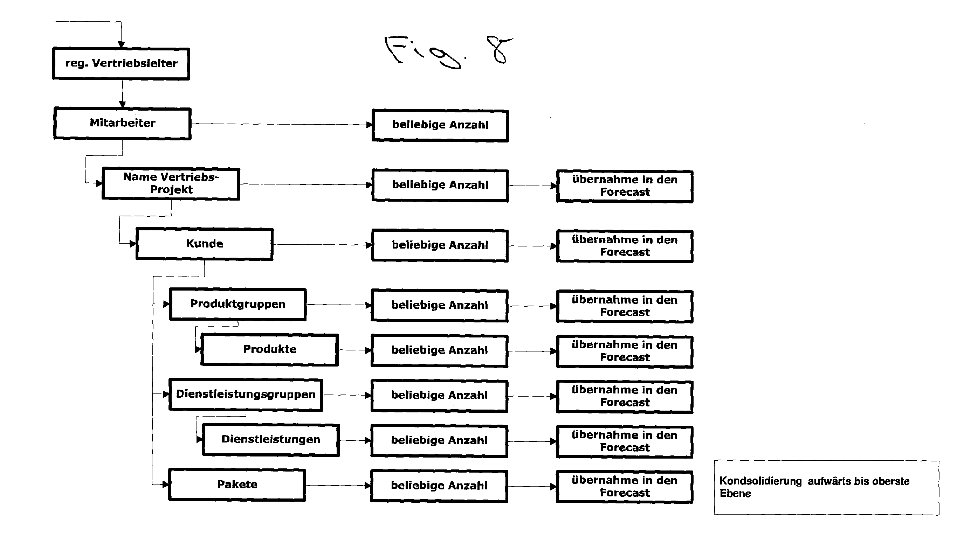

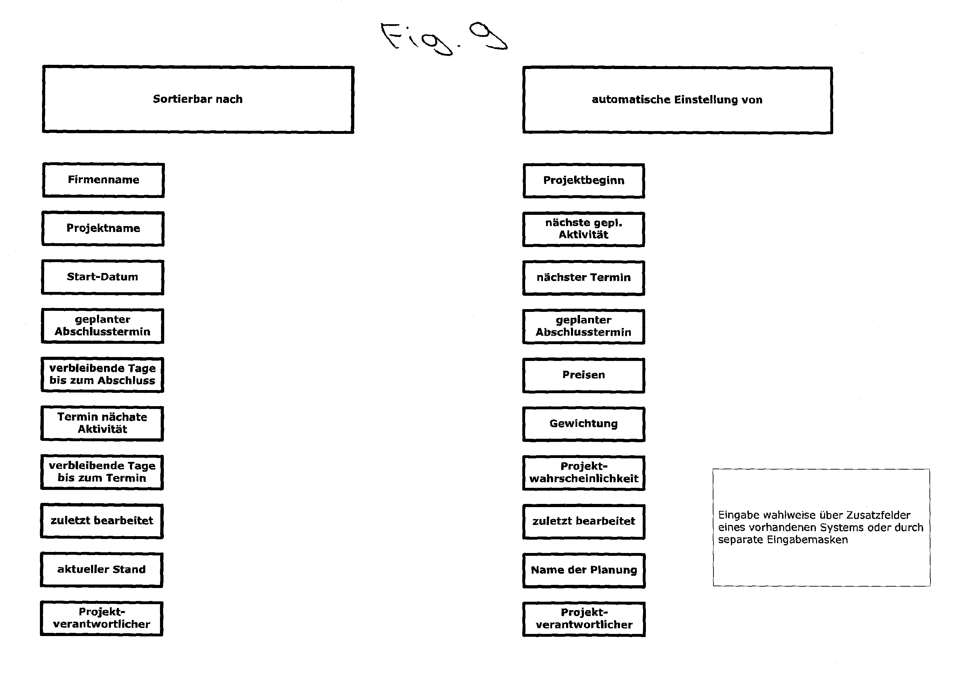

Die Figuren 7 und 8 zeigen noch einmal die Struktur der Programmbereiche Forecast und Projekt sowie die Informations- und Darstellungsmöglichkeiten in den entsprechenden Modulen (siehe Figur 9). Entsprechend können für einzelne Vertriebsmitarbeiter im Bezug auf Kunden, Produkte, Produkt- und Dienstleistungsgruppen, Dienstleistungen, Kombinationen daraus (Pakete), Gebiete (international, national, regional) beliebige Planungen vorgenommen werden, wobei insbesondere diese entsprechenden Planungen mit einem Projektablaufplan im Modul Projekt verbunden werden können, wie in Figur 9 zu sehen ist. Entsprechend lassen sich dort, wie die Felder der Figur 9 zeigen, entsprechende Termine, Zeiträume, Bearbeitungsstatus usw. darstellen.

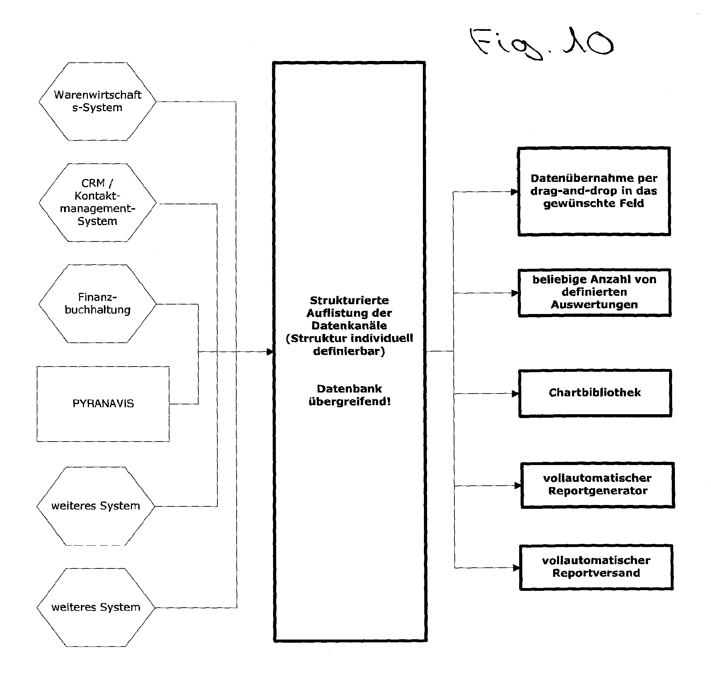

Die Figur 10 zeigt die Struktur des Programmmoduls Controlling, bei welchem die Planungs- und Kontrollwerte aus dem Planungsmodul sowie zusätzliche Daten aus den Modulen Forecast und Projekte entsprechend strukturiert dargestellt werden können, wobei datenbankübergreifend Daten aus unterschiedlichen Datenbanken miteinander kombiniert werden können. Insbesondere können Daten von externen Systemen, wie z. B. Warenwirtschaftssystemen, Kontaktmanagementsystemen oder Finanzbuchhaltungssystemen mit integriert werden, um eine beliebige Anzahl von definierten Auswertungen, Diagrammen und Berichten zu erzeugen.

Neben dem Berichtswesen im Modul Report kann das Modul Controlling auch für Alarmfunktionen verwendet werden, wobei für beliebig definierte Datensätze beliebige Grenzwerte definiert werden können, die zu einer entsprechenden Warnung mit einer beliebig definierten Art der Benachrichtigung führen. Auf diese Weise enthält der für die Prozesse Verantwortliche automatisch Warnhinweise, wenn die Prozessentwicklung nicht den gewünschten Zielen entspricht.

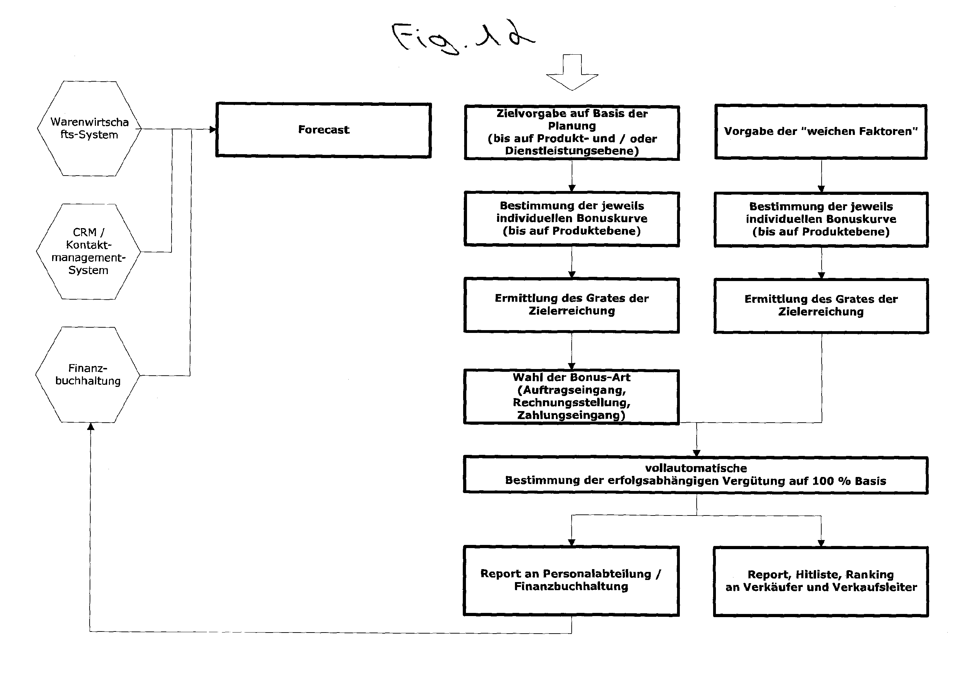

Darüber hinaus können, wie Figur 12 zeigt, die in dem Planungswerkzeug gesammelten und gewonnen Daten auch zur erfolgsabhängigen Vergütung der Vertriebsmitarbeiter eingesetzt werden, wobei auf Basis der Planungswerte Zielvorgaben für die Vertriebsmitarbeiter definiert werden können. Gemäß diesen Daten können individuelle Bonussysteme in Art von Bonuskurven definiert werden, die die Höhe des Bonus in Abhängigkeit bestimmter Verkaufsergebnisse definiert.

Mit Hilfe von Daten der tatsächlich erzielten Umsätze kann der Grad der Zielerreichung ermittelt werden und mit den hinterlegten Daten der Bonuskurve die automatische Bestimmung der erfolgsabhängigen Vergütung erfolgen. Diese vollautomatische Bestimmung der erfolgsabhängigen Vergütung kann dann direkt an die Finanzbuchhaltung sowie als Bericht an die Personalabteilung und Finanzbuchhaltung sowie in weiteren Berichten ausgegeben werden.

Neben der Zielvorgabe auf Basis der Planung können auch weitere Faktoren zur Bestimmung der erfolgsabhängigen Vergütung mit einfließen.

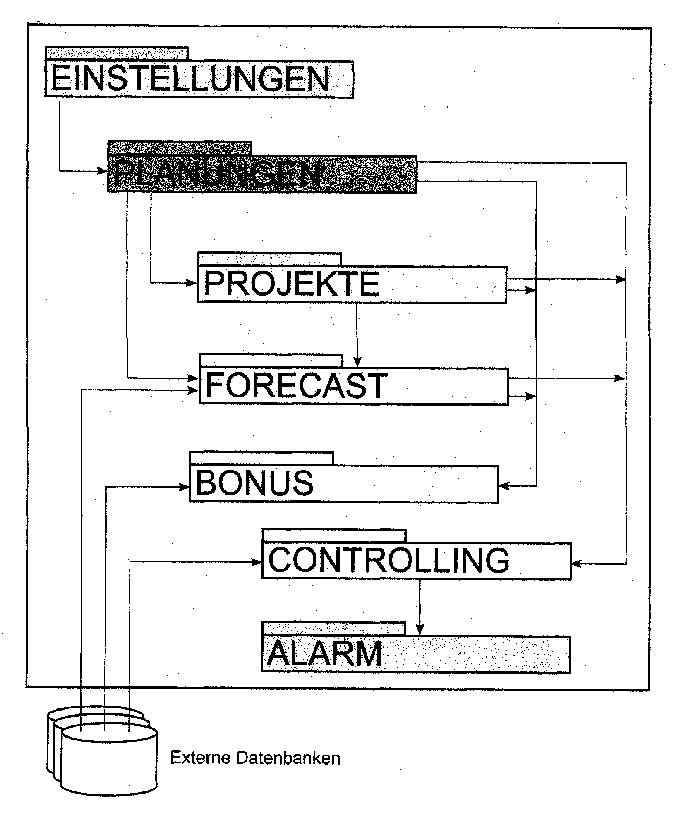

Die Figur 13 zeigt noch einmal in einer Übersicht die Modulstruktur des erfindungsgemäßen Planungswerkzeugs, mit welchem das erfindungsgemäße Verfahren durchgeführt werden kann. Das Planungswerkzeug umfasst die Module Einstellungen, Planungen, Projekte, Forecast, Bonus, Controlling und Alarm.

Wie bereits vorher erwähnt, werden in den Einstellungen allgemein die Prozesse mit den unbestimmt variablen Ressourcen und den Prozessdaten frei definiert, wobei im gezeigten Ausführungsbeispiel beliebig viele Vertriebsprozesse mit unterschiedlich vielen Vertriebsschritten strukturiert werden können. Zusätzlich wird eine beliebige Anzahl von Datenfeldern definiert, die beispielsweise Daten bzgl. der Kunden, Produkte, Dienstleistungen, Mitarbeiter, Verkaufsgebiete, Ertragswerte, Marktanteile, Kombinationen daraus etc. umfassen.

Mit der in den Einstellungen definierten Datenstruktur können dann im Programmmodul Planungen gemäß der hinterlegten Datenstruktur für die einzelnen Bereich wie Mitarbeiter, Regionen, Produkte, Dienstleistungen usw. durch Eingabe absoluter Ressourcenwerte sowie Wahrscheinlichkeitswerte und Ermittlung der relativen Ressourcenwerte bestimmt werden. Im gezeigten Ausführungsbeispiel handelt es sich hierbei beispielsweise um den Zeitbedarf für einzelne Vertriebsschritte (absoluter Ressourcenwert) und die Wahrscheinlichkeit für den Verkaufsabschluss resultierend aus diesem Vertriebsschritt (Wahrscheinlichkeitswert). Das Produkt aus dem absoluten Ressourcenwert und der Wahrscheinlichkeit ergibt einen relativen Ressourcenwert in Form des Zeitbedarfs pro Verkauf.

In gleicher Weise können als absolute Ressourcenwerte die Anzahl der Kunden und die Kauf-/Investitionszyklen angegeben werden, wobei als Wahrscheinlichkeitswerte der entsprechende Marktanteil zur Verfügung steht. Mit diesen Werten lässt sich der relative Ressourcenwert des Absatzpotentials, also der möglicherweise zu verkaufenden Produkte z. B. in einem Gebiet bestimmen.

Mit diesen relativen Ressourcenwerten lassen sich durch Verknüpfung mit Prozessdaten, beispielsweise der gesamt zur Verfügung stehenden Vertriebszeit bzw. Kapazität entsprechende Planungs- und/oder Kontrollwerte ermitteln.

Diese Planungs- und/oder Kontrollwerte werden dann an die weiteren Module Projekte, Forecast, Bonus und Controlling übergeben, um dort weiterverarbeitet oder dargestellt zu werden. Beispielsweise lassen sich im Modul Projekte die Planungs- und Kontrollwerte zur Projektsteuerung mit Zeitablaufplänen und dergleichen verwenden. Im Bereich Forecast können die Planungs- und Kontrollwerte zur gezielten Planung und Produktionssteuerung eingesetzt werden. Dazu kann auf zusätzliche externe Datenbanken zurückgegriffen werden, die beispielsweise Informationen bzgl. der benötigten Materialien liefern.

Im Modul Bonus kann eine erfolgsabhängige Vergütung voll automatisch realisiert werden, wobei wiederum auf externe Datenbanken zurückgegriffen werden kann, die zusätzliche Informationen liefern.

Gleiches gilt für das Modul Controlling, bei dem ein entsprechendes Berichtswesen und eine Darstellung der Planungs- und/oder Ist-Situation gegeben ist, wobei zusätzlich Informationen an das Alarmmodul übergeben werden, welches entsprechende Warnhinweise ausgeben kann.

Im Modul Controlling werden ebenfalls Daten von externen Datenbanken mit einbezogen, um datenbankübergreifend eine Vielzahl von verschiedenen Daten in unterschiedlichste Auswertungen und Darstellungen übernehmen zu können. Auch hier können verschiedenste Darstellungen und Berichte frei definiert werden.

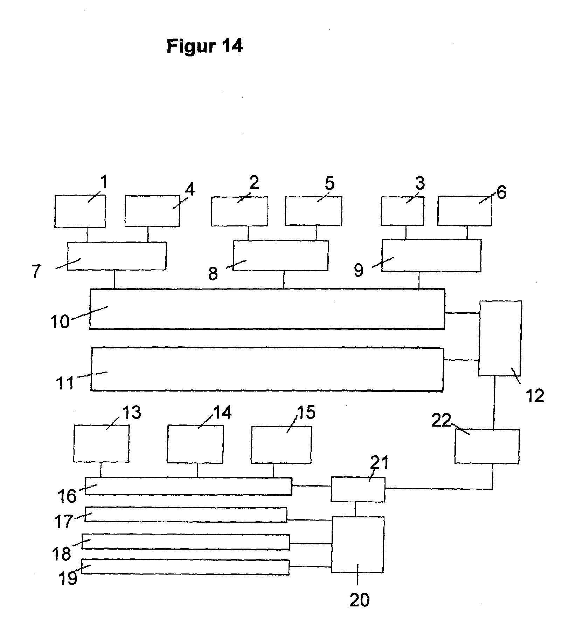

Die Figur 14 erläutert noch einmal schematisch den Kern des Planungsmoduls bzw. des damit verwirklichten Arbeitsverfahrens. Aus einer beliebigen Anzahl von absoluten Ressourcenwerten 1, 2, 3 werden mit entsprechenden Wahrscheinlichkeitswerten 4, 5, 6 relative Ressourcenwerte 7, 8, 9 ermittelt, welche zu einem gesamt relativen Ressourcenwert 10 addiert bzw. kombiniert werden. Beispielsweise können die absoluten Ressourcenwerte 1, 2, 3 den Zeitbedarf für verschiedene Vertriebsschritte eines Vertriebsmitarbeiters darstellen, während die Wahrscheinlichkeitswerte 4, 5, 6, die Wahrscheinlichkeit eines entsprechenden Abschlusses aus diesem Vertriebsschritt darstellen. Entsprechend geben die relativen Ressourcenwerte 7, 8, 9 den Zeitbedarf pro Abschluss für die einzelnen Vertriebsschritte an, während der relative Ressourcenwert 10 den Gesamtzeitbedarf pro Abschluss definiert. Dieser wird dann mit der gesamten für den Vertriebsmitarbeiter zur Verfügung stehenden Zeit 11 in Bezug gesetzt, so dass der Planungswert 12 die Zahl der möglichen zu erwartenden Abschlüsse des Vertriebsmitarbeiters angibt. Diese können bezogen sein auf ein bestimmtes Gebiet oder einen Zeitraum. Da die absoluten Ressourcenwerte 1, 2, 3 und die Wahrscheinlichkeitswert 4, 5, 6 von der Ebene des Verkäufers ausgehen, ist dies ein Ansatz einer Bottom-Up-Planung.

Im unteren Teilbild der Figur 14 ist dagegen dargestellt, wie eine Top-Down-Planung verwirklicht werden könnte.

Bei der Top-Down-Planung wird beispielsweise aus dem absoluten Ressourcenwert 13 bzgl. der Anzahl der Kunden in einem Gebiet sowie dem weiteren absoluten Ressourcenwert bzgl. des Kauf-/Investitionszyklus zusammen mit dem Wahrscheinlichkeitswert 15 des Marktanteils ein relativer Ressourcenwert 16 bzgl. des Absatzpotentials in Form von möglichen Verkäufen ermittelt.

Aus den beispielsweise durch einzelne Vertriebsmitarbeiter zur Verfügung stehenden Vertriebskapazitäten 17, 18, 19 wird eine Gesamtvertriebskapazität 20 bestimmt, die ins Verhältnis zu dem Absatzpotential 16 gesetzt wird, um den Planungswert 21 in Form eines Vertriebsziels zu erhalten, das z. B. in der Art Anzahl von Verkäufen pro Zeitaufwand gegeben ist. Dieser Planungswert der Top-Down-Planung wird dann wiederum über das Vergleichsmodul 22 mit dem Planungswert 12 der Bottom-Up-Analyse verglichen, um so zu einem abgestimmten Planungsziel zu kommen.

Insgesamt kann mit dem vorgestellten Verfahren und der Verwirklichung in einem entsprechenden Planungswerkzeug der Produktionsprozess von Gütern beschleunigt und effektiver gestaltet werden, da der bisher unstrukturierte Vertriebsprozess nunmehr als Teil des Produktionsprozesses aufgefasst und angesehen wird und durch die entsprechende Strukturieren und Planung verlässliche Werte für die Produktionsplanung liefert.

Obwohl die vorliegende Erfindung im Bezug auf eine bevorzugte Ausführungsform detailliert dargestellt worden ist, ist selbstverständlich, dass die Erfindung abgewandelt und abgeändert werden kann, ohne den Schutzbereich der beigefügten Ansprüche zu verlassen. Insbesondere kann die Erfindung auf verschiedenste Prozesse angewandt werden.

## Patentansprüche

1. Arbeitsverfahren zur automatisierten Planung und Überprüfung von Prozessen mit unbestimmt variablen Resourcen,
bei welchem mittels Erfassungsmitteln Daten bezüglich der unbestimmt variablen Resourcen (Resourcendaten) und des die Resourcen verbrauchenden Prozesses (Prozessdaten) in einer Datenverarbeitungsanlage erfasst werden,
wobei die Resourcendaten absolute Resourcenwerte und Werte zur Wahrscheinlichkeit der absoluten Werte (Wahrscheinlichkeitswerte) umfassen, welche zu einem oder mehreren relativen Resourcenwerten mittels Datenverarbeitungsmitteln verarbeitet werden, und wobei
der oder die relativen Resourcenwerte mittels Datenverarbeitungsmitteln den Prozessdaten zugeordnet werden, so dass mindestens ein Planungs- und/oder Kontrollwert bestimmt wird.

2. Verfahren nach Anspruch 1,
**dadurch gekennzeichnet, dass**
die Prozesse Vertriebsprozesse umfassen, die insbesondere in verschiedene Vertriebsschritte unterteilbar sind.

3. Verfahren nach einem der vorhergehenden Ansprüche,
**dadurch gekennzeichnet, dass**
als ein absoluter Resourcenwert der Zeitbedarf für einen Vertriebsschritt, vorzugsweise der Zeitbedarf für mehrere Vertriebsschritte als mehrere absolute Resourcenwerte und als Wahrscheinlichkeitswert(e) die Wahrscheinlichkeit(en) eines möglichen Verkaufs aus diesem oder diesen Vertriebsschritten sowie die für den gesamten Vertriebsprozess zur Verfügung stehende Zeit als Prozessdaten erfasst werden, wobei das Produkt aus Wahrscheinlichkeit oder kumulierter Wahrscheinlichkeit und Zeitbedarf für einen Vertriebsschritt oder aufsummiertem Zeitbedarf für mehrere Vertriebsschritte den oder die relativen Resourcenwerte Zeit pro Verkauf ergibt, welche im Verhältnis zur zu Verfügung stehenden Zeit als Planungs- und/oder Kontrollwerte ein Absatzziel oder eine Absatzkontrolle ergeben.

4. Verfahren nach Anspruch 3,
**dadurch gekennzeichnet, dass**
die zur Verfügung stehende Zeit für ein oder mehrere bestimmte Absatzgebiete, für einen oder mehrere Mitarbeiter und/oder für ein oder mehrere Produkte und/oder Dienstleistungen und/oder für ein oder mehrere Zeiträume erfasst werden.

5. Verfahren nach einem der vorhergehenden Ansprüche,
**dadurch gekennzeichnet, dass**
als absolute Resourcenwerte die Anzahl der Kunden, insbesondere die Anzahl der Kunden in einem Gebiet, und der Bedarf der einzelnen Kunden sowie der Marktanteil als Wahrscheinlichkeitswert erfasst werden, wobei das Produkt aus der Anzahl der Kunden, insbesondere der Anzahl der Kunden in einem Gebiet, dem Bedarf des einzelnen Kunden und dem Marktanteil das Absatzpotential als relativen Resourcenwert ergibt, welcher im Verhältnis zur zu Verfügung stehenden Vertriebskapazität das Vertriebsziel als Planungswert oder die Vertriebskontrolle als Kontrollwert ergibt.

6. Verfahren nach einem der vorhergehenden Ansprüche,
**dadurch gekennzeichnet, dass**
Planungs- und/oder Kontrollwerte verschiedener Prozesse miteinander verglichen und/oder kombiniert werden, insbesondere in der Weise, dass sie als Korrekturmittel eingesetzt werden, und/oder zur Variation absoluter Resourcenwerte anderer Prozesse eingesetzt werden.

7. Verfahren nach Anspruch 5,
**dadurch gekennzeichnet, dass**
das Vertriebsziel zur Bestimmung der Anzahl der Vertriebsschritte und/oder zur Überprüfung des Absatzziels eingesetzt wird.

8. Verfahren nach einem der vorhergehenden Ansprüche,
**dadurch gekennzeichnet, dass**
mehrere Vertriebsprozesse für unterschiedliche Produkte und/oder Dienstleistungen, für oder von einem oder mehreren Mitarbeitern, für ein oder mehrere Gebiete automatisiert abgebildet und/oder miteinander kombiniert werden.

9. Verfahren nach Anspruch 3,
**dadurch gekennzeichnet, dass**
die Planungs- und/oder Kontrollwerte mit Erträgen und Kosten in Bezug gesetzt werden, insbesondere die Absatz- und oder Vertriebsziele und/oder die Absatz- und/oder die Vertriebskontrolle mit den Kosten des Vertriebsprozesses umfassend Rabattkosten, Material- und/oder Mitarbeiterkosten sowie den Ertragswerten in Bezug gesetzt werden, um die Rentabilität abzuschätzen.

10. Verfahren nach Anspruch 3,
**dadurch gekennzeichnet, dass**
die Planungs- und/oder Kontrollwerte , insbesondere die Absatzziele und/oder Absatzkontrollwerte zur Produktionssteuerung und/oder Vergütung der Vertriebsmitarbeiter herangezogen werden.

11. Verfahren nach einem der vorhergehenden Ansprüche,
**dadurch gekennzeichnet, dass**
die absoluten und/oder relativen Resourcenwerte und/oder Prozessdaten und/oder die Planungs- und/oder Kontrollwerte zur Projektsteuerung eingesetzt werden.

12. Verfahren nach einem der vorhergehenden Ansprüche,
**dadurch gekennzeichnet, dass**
tatsächliche Prozessdaten mit den Planungswerten in Bezug gesetzt werden, um eine Überprüfung der Planungsqualität zu erhalten, wobei insbesondere aus den tatsächlichen Prozessdaten Rückkopplungen zur Ermittlung der Planungswerte vorgenommen werden.

13. Verfahren nach einem der vorhergehenden Ansprüche,
**dadurch gekennzeichnet, dass**
die Resourcendaten geschätzte Daten und/oder tatsächlich in der Vergangenheit ermittelte Daten und/oder aus ermittelten Daten extrapolierte oder gemittelte Daten sind.

14. Verfahren nach einem der vorhergehenden Ansprüche,
**dadurch gekennzeichnet, dass**
die Daten und/oder Werte graphisch dargestellt werden.

15. Verfahren nach einem der vorhergehenden Ansprüche,
**dadurch gekennzeichnet, dass**
Daten zu Kunden, Produkten, Dienstleistungen, Mitarbeitern, Vertriebsschritten, Verkaufsgebiete, Ertragswerte und/oder Marktanteile erfasst werden.

16. Planungswerkzeug zur Durchführung des Verfahrens nach einem der vorhergehenden Ansprüche mit Datenerfassungsmitteln, Datenspeichermitteln, Datenverarbeitungsmitteln und Datenausgabemitteln, die zur Durchführung des Verfahrens nach einem der vorhergehenden Ansprüche eingerichtet sind.

17. Planungswerkzeug nach Anspruch 16,
**dadurch gekennzeichnet, dass**
es als maschinenlesbare Signalfolge auf einem oder mehreren Speichermedien vorliegt,
wobei das Verfahren nach einem der Ansprüche 1 bis 15 ausgeführt wird, wenn die Signalfolge in einer Datenverarbeitungsanlage abgearbeitet wird.
